# FASCICULE DE BREVET EUROPEEN

(11) **EP 1 191 702 B1**
(45) Date de publication et mention de la délivrance du brevet: **18.10.2006**
(21) Numéro de dépôt: 01000454.7
(22) Date de dépôt: 13.09.2001
(51) Int. Cl.: H04B 1/40

(54) **Emetteur récepteur UMTS bimode**
Bimodaler Sendeempfänger für UMTS
Bi-mode transceiver for UMTS

(30) Priorité: 20.09.2000 FR 0011956
(43) Date de publication de la demande: 27.03.2002
(73) Titulaire: SAGEM Communication, 75015 Paris (FR)
(72) Inventeur: Romao, Fernando, 78360, Montesson (FR)
(74) Mandataire: Schmit, Christian Norbert Marie

(56) Documents cités:
- EP-A- 0 820 154
- EP-A- 0 823 790
- GB-A- 2 346 049

## Description

La présente invention concerne un émetteur récepteur UMTS bimode. Elle s'applique ainsi au domaine de la téléphonie mobile selon la norme UMTS (Universal Mobile Telephony System en anglais pour système de téléphonie universelle). Un émetteur récepteur UMTS peut fonctionner selon deux modes de réalisation différents. Ces modes permettent de déterminer une méthode d'accès à un canal de communication. Il s'agit généralement d'un canal radio mobile. Ainsi, un premier mode d'accès est un mode dit FDD (pour Frequency Division Duplex en anglais pour duplex par division de fréquence). Un émetteur récepteur réalisé selon ce mode FDD utilise pour l'émission une fréquence d'émission, prise dans une bande de fréquence d'émission, et pour la réception une fréquence de réception, prise dans une bande de fréquence de réception, différente de la fréquence d'émission. Ce mode FDD correspond à une communication bidirectionnelle simultanée qui est plus couramment nommée communication full duplex.

Un deuxième mode est un mode dit TDD (Time Division Duplex en anglais pour duplex par division temporelle). Un émetteur récepteur réalisé selon ce mode TDD n'utilise qu'une seule fréquence pour l'émission et pour la réception, ce type d'émetteur récepteur ayant alors recours à l'alternance pour assurer une communication entre deux émetteurs récepteurs utilisant le mode TDD. On parle alors de communication bidirectionnelle alternée ou plus couramment de communication Half Duplex. Le document EP-A-08020154 concerne un système multibandes.

Le but de l'invention est de réaliser une architecture d'émetteur récepteur incluant ces deux modes d'accès FDD et TDD tout en minimisant un coût de revient d'un tel émetteur récepteur bimode.

Actuellement, on connaît des architectures d'émetteurs récepteurs UMTS bimode. Ces architectures font apparaître deux voies distinctes qui sont d'une part une voie d'émission réception pour le mode TDD et d'autre part une voie d'émission réception pour le mode FDD. Ces deux voies sont raccordées à une même antenne d'émission réception par l'intermédiaire d'un dispositif de sélection faisant office de commutateur. Chaque voie d'émission réception est séparée en deux sous-voies, une sous-voie d'émission et d'une sous-voie de réception et ce pour chaque mode. La sous-voie d'émission et la sous-voie de réception selon le mode TDD sont reliées à une entrée du sélecteur par l'intermédiaire d'un deuxième moyen de commutation. Une telle solution s'impose à l'évidence puisque le mode TDD met en oeuvre une communication bi-directionnelle alternée c'est à dire qu'une seule sous-voie d'émission ou de réception est active à un instant donné. Cependant, dans la voie selon le mode FDD la communication est de type simultanée. Ainsi, la sous-voie d'émission FDD et la sous-voie de réception FDD sont reliées à une deuxième entrée sortie du sélecteur par l'intermédiaire d'un filtre duplexeur. Un filtre duplexeur est un dispositif assurant une fonction d'aiguillage par filtrage. En conséquence, un filtre duplexeur assurant une fonction d'aiguillage parmi deux voies comporte ainsi une première voie accordée sur une première bande de fréquence et une deuxième voie accordée sur une deuxième bande de fréquence.

Une telle réalisation présente des problèmes. En effet, seule la voie d'émission réception selon le mode FDD assure une première phase de filtrage grâce à la présence du filtre duplexeur. En conséquence, la voie d'émission réception selon le mode TDD doit comporter des dispositifs de filtrage. Notamment, la sous-voie de réception TDD comporte à elle seule un préfiltrage avant amplification, puis un second filtrage après amplification. Ainsi, dans cette réalisation selon l'état de la technique, chaque voie d'émission réception met en oeuvre sa fonction de filtrage, ce qui augmente le coût de revient de l'ensemble.

La présente invention a pour objet de remédier à ces problèmes en proposant une nouvelle architecture dans laquelle on diminue la contrainte de filtrage pesant sur la voie d'émission réception TDD en mettant en profit la présence du filtre duplexeur dans cet émetteur récepteur UMTS. Cela a pour effet de diminuer un nombre de filtre dans cet émetteur récepteur et de conduire à une diminution du prix de revient de cet émetteur récepteur.

L'invention est définie dans les revendications.

La présente invention sera mieux comprise à la lecture de la description qui suit et à l'examen des figures qui l'accompagnent. Celles-ci ne sont montrées qu'à titre indicatif et nullement limitatif de l'invention. Les figures montrent :

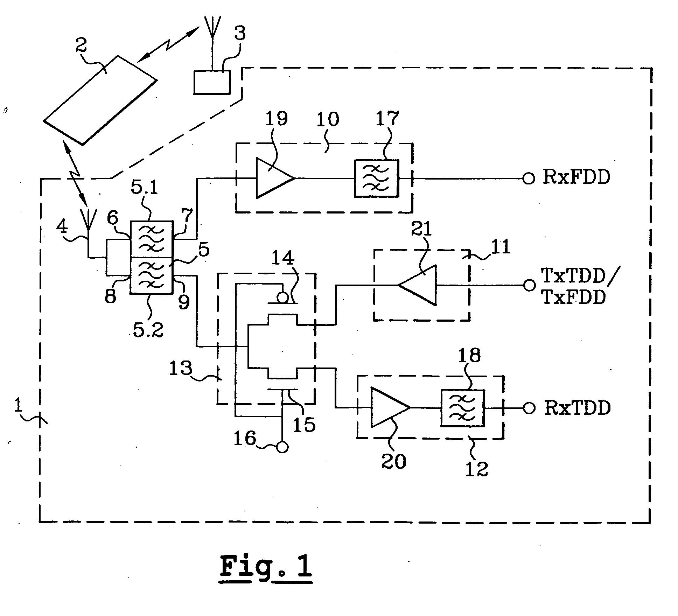

- Figure 1 : Une représentation simplifiée d'un émetteur montre une architecture d'un émetteur récepteur selon l'invention.

La figure 1 montre une architecture simplifiée d'un circuit 1 d'émission réception selon la norme UMTS. La norme UMTS permet deux modes d'accès à un canal 2 de communication. Ce canal 2 représente le support physique permettant l'échange d'information entre le circuit 1 et un autre circuit 3 d'émission réception. On parle encore de canal 2 radiomobile. La norme UMTS défini un système de communication utilisant une transmission par code. Ainsi, un signal associé à un premier code peut coexister dans le canal 2 sans interférence avec un signal associé à un deuxième code à la même fréquence. En effet, les codes sont orthogonaux c'est à dire on peut retrouver facilement par corrélation un signal associé à un code parmi plusieurs. Toutefois, dans la norme UMTS, deux modes d'accès ont été définis. Un premier mode est un mode d'accès par division temporelle ou encore mode TDD. Ce mode TDD permet de mettre en oeuvre pour une communication de type alterné c'est à dire que l'appelant et l'appelé utilisent une même fréquence de transmission mais qu'un accès au canal 2 est alterné.

Un deuxième mode est un mode d'accès par division fréquencielle ou encore mode FDD. Ce mode FDD permet de mettre en oeuvre une communication de type simultanée c'est à dire qu'une émission et une réception utilisent deux fréquences différentes. Ainsi, un accès au canal 2 en mode FDD est simultané de la part du circuit 1 et du circuit 3 lorsque ces deux circuits communiquent ensemble. En outre, la norme UMTS définit un plan de fréquence pour le fonctionnement en mode TDD et FDD. Ce plan de fréquence définit une bande de fréquence d'émission et une bande de fréquence de réception pour le mode FDD et une bande de fréquence associée au mode TDD. La bande de fréquence du mode TDD est scindée en deux parties disposées de part et d'autre de la bande d'émission du mode FDD.

Le circuit 1 comporte une antenne 4 d'émission réception assurant l'adaptation entre le circuit 1 et le canal 2.

Dans l'invention, le circuit 1 comporte un filtre 5 duplexeur à deux voies 5_1 et 5_2 ou encore filtres 5_1 et 5_2. Un filtre duplexeur est un circuit assurant une fonction de multiplexage démultiplexage. Ainsi, la voie 5_1 est dimensionnée pour accepter une bande de fréquence associée au mode d'accès FDD en réception. La voie 5_2 accepte, selon une des caractéristiques de l'invention, la bande de fréquence associée au mode TDD et la bande de fréquence d'émission associée au mode FDD. La voie 5_1 comporte une première extrémité 6 et une deuxième extrémité 7. La voie 5_2 comporte une première extrémité 8 et une deuxième extrémité 9. Les extrémités 6 et 8 sont reliées à l'antenne 4. Le circuit 1 comporte plusieurs voies de traitement. Il y a ainsi une voie 10 de réception FDD, une voie 11 d'émission FDD et TDD ainsi qu'une voie 12 de réception TDD. La voie 10 est reliée à l'extrémité 7 du filtre 5_1. Les voies 11 et 12 sont reliées à l'extrémité 9 du filtre 5_2 par l'intermédiaire d'un moyen 13 de commutation. Ce moyen 13 peut être réalisé à l'aide de deux transistors 14 et 15 par exemple et dont le fonctionnement est complémentaire. Ainsi, ces deux transistors 14 et 15 sont reliés à une même commande 16 à deux états, un premier état permettant de commander un des transistors et de bloquer l'autre, l'autre état réalisant la fonction complémentaire.

Ainsi, les voies 10 et 12 de réception bénéficient d'un préfiltrage de la part des filtres 5_1 et 5_2 respectivement et ne nécessite donc plus que la présence de filtres 17 et 18 après amplification par des amplificateurs 19 et 20 à faibles bruits. De même, le filtre 5_2 assure une fonction de filtrage d'un signal à émettre produit par un amplificateur 21 de la voie 11. La présence du duplexeur 5 permet ainsi de répartir la sélectivité avec les filtres 17 et 18.

Dans une variante, le filtre 5_1 et ou le filtre 5_2 sont symétriques. Cela signifie que la réponse en fréquence des filtres 5_1 et ou 5_2 en considérant les extrémités 6 et 8 comme des sorties est la même que si les extrémités 7 et 9 étaient considérées comme des sorties. Ceci est particulièrement intéressant pour le filtre 5_2. En effet, l'extrémité 9 est reliée d'une part à la voie 11 qui est en émission et à la voie 12 qui est en réception. Ainsi les extrémités 8 et 9 jouent le rôle d'entrée sortie et non pas seulement d'entrée ou de sortie. Dans un exemple de réalisation préféré du duplexeur 5, selon cette dernière variante, et tout du moins du filtre 5_2, ce dernier à un comportement en filtre passe bande.

## Revendications

1. Circuit (1) d'émission réception UMTS permettant deux modes (TDD, FDD) d'accès à un canal de communication, un premier mode (TDD) étant un mode d'accès par division temporelle et un deuxième mode (FDD) étant un mode d'accès par division fréquencielle, ce circuit comportant une antenne (4) reliée à une entrée sortie (6, 8) d'un filtre duplexeur (5) à deux voies (5_2, 5_1), la première voie (5_2) étant dimensionnée pour accepter une bande de fréquence (Rx,Tx) associée au premier mode (TDD) d'accès ainsi que la bande d'émission (Tx) associée au deuxième mode (FDD) d'accès, la deuxième voie étant dimensionnée pour accepter la bande de réception (Rx) du deuxième mode (FDD), la deuxième voie du filtre duplexeur étant reliée à une troisième voie (10) adaptée à la bande de réception (Rx) du deuxième mode (FDD) et la première voie du filtre duplexeur étant reliée, par l'intermédiaire d'un moyen (13) de commutation,
- d'une part à une quatrième voie (11) d'émission selon la bande d'émission (Tx) du premier (TDD) et du deuxième (FDD) mode, et
- d'autre part à une cinquième voie (12) de réception (Rx) adaptée à la bande de réception associée au premier mode (TDD),
**caractérisé en ce que** :
- la cinquième voie (12) de réception (Rx) adaptée à la bande de réception associée au premier mode (TDD) est différente de la troisième voie (10) adaptée à la bande de réception (Rx) du deuxième mode (FDD), la troisième et la cinquième voies comportant chacune uniquement un filtre (17, 18) adapté à la bande de réception, respectivement, du mode FDD et du mode TDD et associé à un amplificateur à faible bruit (19, 20),
- la quatrième voie comporte uniquement un amplificateur (21).

2. Circuit d'émission réception selon la revendication 1, **caractérisé en ce que** la première et ou la deuxième voie du filtre duplexeur sont symétriques.

3. Circuit d'émission réception selon l'une des revendications 1 à 2, **caractérisé en ce que** la première et ou la deuxième voie du filtre duplexeur ont un comportement en filtre passe-bande.

## Claims

1. UMTS transmission-reception circuit (1) enabling two modes (TDD, FDD) of access to a communications channel, a first mode (TDD) being a time division duplex mode of access, and a second mode (FDD) being a frequency division duplex mode of access, this circuit comprising an antenna (4) connected to an input-output (6,8) of a two-channel (5_2, 5_1) duplexer filter (5), the first channel (5_2) being sized to accept a frequency band (Rx, Tx) associated with the first mode of access (TDD) as well as the transmission band (Tx) associated with the second mode (FDD) of access, the second channel being sized to accept the reception band (Rx) of the second mode (FDD), the second channel of the duplexer filter being connected to a third channel (10) adapted to the reception band (Rx) of the second mode (FDD) and the first channel of the duplexer filter being connected by means of a switching means (13),
- firstly to a fourth transmission channel (11) according to the transmission band (Tx) of the first (TDD) mode and of the second (FDD) mode, and
- secondly to a fifth reception (Rx) channel (12) adapted to the reception band associated with the first mode (TDD),
**characterized in that**
- the fifth reception (Rx) channel (12) adapted to the reception band associated with the first mode (TDD) is different from the third channel (10) adapted to the reception band (Rx) of the second mode (FDD), the third and the fifth channels each comprising only one filter (17,18) adapted to the reception band, respectively, of the FDD mode and the TDD mode and associated with a low-noise amplifier (19,20),
- the fourth channel comprising only one amplifier (21).

2. Transmission-reception circuit according to claim 1, **characterized in that** the first channel and/or the second channel of the duplexer filter are symmetrical.

3. Transmission-reception circuit according to one of the claims 1 to 2, **characterised in that** the first channel and/ or the second channel of the duplexer filter behave as a bandpass filter.

## Patentansprüche

1. UMTS-Sende-Empfangs-Schaltung (1), die zwei Zugriffsmodi (TDD, FDD) zu einem Kommunikationskanal ermöglicht, wobei ein erster Modus (TDD) ein Zugriffsmodus durch Zeitaufteilung und ein zweiter Modus (FDD) ein Zugriffsmodus durch Frequenzaufteilung ist, wobei diese Schaltung eine Antenne (4) umfasst, die mit einem Eingang-Ausgang (6, 8) eines Duplexing-Filters (5) mit zwei Wegen (5_2, 5_1) verbunden ist, wobei der erste Weg (5_2) derart dimensioniert ist, dass er ein Frequenzband (Rx, Tx), das mit dem ersten Zugriffsmodus (TDD) verbunden ist, sowie das Sendeband (Tx), das mit dem zweiten Zugriffsmodus (FDD) verbunden ist, annimmt, wobei der zweite Weg derart dimensioniert ist, dass er das Empfangsband (Rx) des zweiten Modus (FDD) annimmt, wobei der zweite Weg des Duplexing-Filters mit einem dritten Weg (10) verbunden ist, der an das Empfangsband (Rx) des zweiten Modus (FDD) angepasst ist, und wobei der erste Weg des Duplexing-Filters über Umschaltmittel (13) verbunden ist mit:
- einerseits einem vierten Sendeweg (11) gemäß dem Sendeband (Tx) des ersten (TDD) und des zweiten (FDD) Modus, und
- andererseits einem fünften Weg (12) für den Empfang (Rx), der an das mit dem ersten Modus (TDD) verbundene Empfangsband angepasst ist,
**dadurch gekennzeichnet, dass**:
- der fünfte Weg (12) für den Empfang (Rx), der an das mit dem ersten Modus (TDD) verbundene Empfangsband angepasst ist, zum dritten Weg (10), der an das Empfangsband (Rx) des zweiten Modus (FDD) angepasst ist, unterschiedlich ist, wobei der dritte und der fünfte Weg jeweils nur einen Filter (17, 18) umfassen, der an das Empfangsband des Modus FDD bzw. des Modus TDD angepasst und mit einem geräuscharmen Verstärker (19, 20) verbunden ist,
- der vierte Weg nur einen Verstärker (21) umfasst.

2. Sende-Empfangs-Schaltung nach Anspruch 1, **dadurch gekennzeichnet, dass** der erste und/oder der zweite Weg des Duplexing-Filters symmetrisch sind.

3. Sende-Empfangs-Schaltung nach einem der Ansprüche 1 bis 2, **dadurch gekennzeichnet, dass** der erste und/oder der zweite Weg des Duplexing-Filters ein Verhalten eines Bandfilters aufweisen.
